# EUROPÄISCHE PATENTSCHRIFT

(11) **EP 2 978 796 B1**
(45) Veröffentlichungstag und Bekanntmachung des Hinweises auf die Patenterteilung: **06.05.2020**
(21) Anmeldenummer: 14713765.7
(22) Anmeldetag: 26.03.2014
(51) Int. Cl.: C08J 5/18, C08L 23/28, C08L 27/06, F16L 58/10

(54) **THERMOPLASTISCHE FOLIE**
THERMOPLASTIC FILM
FILM THERMOPLASTIQUE

(30) Priorität: 27.03.2013 DE 102013005221
(43) Veröffentlichungstag der Anmeldung: 03.02.2016
(73) Patentinhaber: L'Isolante K-Flex S.p.A., 20877 Roncello - MB (IT)
(72) Erfinder: SPINELLI, Carlo, 20877 Roncello (Mailand) (IT)
(74) Vertreter: Otten, Roth, Dobler & Partner mbB Patentanwälte
(86) Internationale Anmeldenummer: PCT/EP2014/000814
(87) Internationale Veröffentlichungsnummer: WO 2014/154357

(56) Entgegenhaltungen:
- EP-A1- 2 375 118
- EP-A2- 0 308 191
- US-A1- 2012 282 432
- JOHN T LUTZ ET AL: "Impact Modifiers for PVC MODES AND MECHANISMS OF IMPACT MODIFICATION", JOURNAL OF VINYL TECHNOLOGY, Bd. 15, Nr. 2, 1. Juni 1993 (1993-06-01), Seiten 82-99, XP055124743,
- SERGEI V. LEVCHIK ET AL: "Overview of the recent literature on flame retardancy and smoke suppression in PVC", POLYMERS FOR ADVANCED TECHNOLOGIES, Bd. 16, Nr. 10, 1. Januar 2005 (2005-01-01), Seiten 707-716, XP055124745, ISSN: 1042-7147, DOI: 10.1002/pat.645
- R. ERRO ZOZAYA ET AL: "PVC-based polymer blends: A review of the methods of study", JOURNAL OF VINYL AND ADDITIVE TECHNOLOGY, Bd. 15, Nr. 3, 1. September 1993 (1993-09-01), Seiten 132-139, XP055124753, ISSN: 0193-7197, DOI: 10.1002/vnl.730150305
- M. Berger: "Polymere", Römpp Online 4.0 , July 2009 (2009-07), Retrieved from the Internet: URL:https://roempp.thieme.de/roempp4.0/do/ data/RD-16-03381 [retrieved on 2018-03-13]

## Beschreibung

Die Erfindung betrifft eine thermoplastische Folie.

### Stand der Technik

Seit vielen Jahrzehnten werden metallische Hüllen eingesetzt, um Material zur thermischen Isolation gegenüber Wettereinflüssen und mechanischen Einwirkungen zu schützen. Derartige Lösungen bestehen z.B. aus Edelstahl, Aluminiumlegierungen, verzinktem Stahl, insbesondere in Rohrform und sind mechanisch fixiert, um entsprechendes Isolationsmaterial abzudecken.

Der Vorteil derartiger Lösungen liegt in der häufig langen Lebensdauer und guten mechanischen Widerstandsfähigkeit. Der größte Nachteil liegt darin, dass unter der metallischen Hülle und unter der zu schützenden Isolationslage Korrosion an der isolierten Verrohrung stattfinden kann. Dieses Problem ergibt sich daraus, dass metallische Hüllen regelmäßig über die Zeit nach Außen nicht 100%ig dicht abgeschlossen werden können. Daher kann Feuchtigkeit unter die metallische Hülle gelangen und in das Isolationsmaterial auf der Verrohrung eindringen. Dies hat zur Folge, dass das Isolationsmaterial Schaden nimmt und die Korrosion der an sich zu schützenden Verrohrung einsetzen kann.

In Bereichen, wo extreme Wetterbedingungen herrschen, zum Beispiel einer Offshore-Plattform, kann ein solcher Vorgang bereits nach 2 bis 3 Jahren einsetzen und eine Erneuerung der Isolation und der schützenden Hülle erfordern.

Darüber hinaus sind nichtmetallische Umhüllungen bekannt.

Der Hauptnachteil derartiger Umhüllungen besteht darin, dass zusätzliche Materialien erforderlich sind, um mit nichtmetallischen Hüllen eine dichte Umschließung der Rohre zu erhalten. Zum dichten Schließen der Umhüllung werden zum Beispiel Klebstoffe, wie zum Beispiel Neoprenkleber eingesetzt.

Andere nichtmetallische Hüllen lassen sich deshalb nicht einsetzen, weil sie den Umgebungsbedienungen nicht lang genug standhalten oder zu teuer sind, wie zum Beispiel Viton oder Teflon.

Die EP 2 375 118 A1 betrifft eine thermoplastische PVC-Komponente mit pflanzlichen Füllstoffen zur Herstellung von flexiblen Schläuchen.

### Aufgabe und Vorteile der Erfindung

Der Erfindung liegt die Aufgabe zugrunde, eine Folie bereitzustellen, mit welcher sich Isolationsmaterialien auf Verrohrungen vergleichsweise einfacher schützen lassen.

Diese Aufgabe wird durch die Merkmale des Anspruchs 1 gelöst. In den abhängigen Ansprüchen sind vorteilhafte und zweckmäßige Weiterbildungen der Erfindung angegeben.

Die Erfindung geht von einer Folie aus, die folgende Bestandteile aufweist: 10 bis 20 Gewichtsprozent eines thermischen Elastomers, das ein chloriertes Elastomer ist, 10 bis 20 Gewichtsprozent eines Thermoplasten, der ein auf Chlor basierender Kunststoff ist, weniger als 15 Gewichtsprozent eines Modifiziermittels, das ein Harz ist, mit dem insbesondere die mechanischen Eigenschaften der Folie vorgebbar sind, weniger als 20 Gewichtsprozent eines nicht diffundierenden Weichmachers, eines Füllstoffs sowie eines flammenhemmenden Materials.

Es hat sich überraschenderweise herausgestellt, dass eine Mischung eines thermoplastischen Elastomers, insbesondere chloriertes Polyethylen, eines Thermoplasten, insbesondere PVC, eines Weichmachers wie z.B. Chlorparaffin zusammen mit einer vorgegebenen Menge von flammenhemmenden Material, insbesondere bromiertes flammenhemmendes Material die Nachteile von bekannten Membranen zum Schutz, insbesondere vor Feuchtigkeit nicht aufweisen.

Die Erfinder haben herausgefunden, dass derartige Folien thermoversiegelt, thermoverschweißt und mit Lösungsmittel verklebt werden können. Zusätzlich lässt sich das Material wie herkömmliche Folien bzw. Membranen anbringen, insbesondere in die richtige Form biegen und zuschneiden.

Ein thermisches Elastomer und ein Thermoplast in Kombination mit einem insbesondere auf Ethylen basierenden Modifiziermittel sind die Basis der Mischung. Die erforderliche Art und die Menge des Weichmachers in der Mischung werden insbesondere bestimmt von einer gewünschten Elastizität und Belastbarkeit der Folie für eine vorgegebene Anwendung. Dies kann sich unterscheiden z.B. abhängig vom Temperaturbereich in der gewünschten Anwendungsart. Füllstoffe in der Mischung der Folie können so ausgesucht werden, dass sie z.B. gute Feuerbeständigkeitseigenschaften und/oder gute Rauchvermeidungseigenschaften aufweisen. Darüber hinaus kann ein Füllstoff die Farbe des Endproduktes bestimmen.

In einer bevorzugten Ausgestaltung der Folie enthält diese in einem vorgegebenen Maße ein flammenhemmendes Material, sodass die EURO-Klasse B entsprechend EN 13501 eingehalten werden kann. Das ist die beste Feuerschutzklasse für Industrie- und Werftanwendungen. Wegen der geringen Wärmeentwicklung des Materials ist der Rauchgasemissionstest entsprechend IMO A-563 oder IMO RES 61 (67) nicht erforderlich.

In der nachstehenden Tabelle sind die Bestandteile thermoplastischer Elastomer, Thermoplast, Modifiziermittel, Füllstoff, flammenhemmendes Material sowie Weichmacher, als beispielhafte konkretisierte Inhaltsstoffe sowie der bevorzugte prozentuale Gewichtsanteil an der Gesamtmischung angegeben.

**Tabelle:**

| **Bestandteil** | **Mögliche Inhaltsstoffe** | **Gewichtsanteil** |
|---|---|---|
| Thermoplastischer Elastomer | Chloriertes Polyethylen | 10-20% |
| Thermoplast | PVC (Polyvinylchlorid) PVC-VA Copolymer polymerisiertes PVC Copolymer mit ACR | 10-20% |
| Modifiziermittel | Keton Ethylen Esterharz Ethylen Methyl Acrylatharz Ethylen Ethyl Acrylatharz Ethylen Butyl Acrylatharz | <15% |
| Füllstoff | Aluminiumhydroxid Magnesiumhydroxid Magnesiumoxid Gibbsit/Brucit Hydrotalkit Calciumcarbonat Zink-Hydrox-Stannat Zinkborat | 0-<40% |
| Flammenhemmendes Material | Antimontrioxid Decabromdiphenylethan 2,4,6-Tris (2,4,6-tribromphenoxy)-1,3,5 Brominatex Epoxydpolymer | 1-10% |
| | | 5-15% |
| | | (Summe <20%) |
| Weichmacher | chlorierte Parrafine Fettsäurepolyesther Dibutoxyethyl Phtalate Trioctyltrimellitat | 5-<20% |

Die einzelnen Bestandteile können auch eine Mischung der einzelnen Inhaltsstoffe sein. Zum Beispiel kann der Thermoplast auch eine Mischung von PVC und PVC-VA in einem vorgegebenen Mischungsverhältnis sein.

Die Harze können abhängig von den gewünschten mechanischen Eigenschaften und/oder etwaiger Umgebungsbedingungen ausgewählt werden.

Zusätzlich lässt sich der Mischung zur Erzeugung der Folie ein Farbstoff zufügen, z.B. Titan-Oxid oder Kohlenstoff, um Farbeffekte im Bereich Schwarz, Grau und Weiß zu erreichen. Der Anteil an Kohlenstoff beträgt vorzugsweise weniger als 10 Gewichtsprozent, der von Titanoxid vorzugsweise weniger als 5 Gewichtsprozent.

Auch der Füllstoff kann abhängig davon ausgewählt werden, welche mechanischen Eigenschaften und/oder flammenhemmenden Eigenschaften gewünscht sind.

Das flammenhemmende Material ist bevorzugt zur Einstellung der flammenhemmenden Eigenschaften auszuwählen. Es lassen sich jedoch auch in einem gewissen Maße mechanische Eigenschaften dadurch beeinflussen.

Das flammenhemmende Material Antimontrioxid wird vorzugsweise in einem Bereich von 1 bis 10 Gewichtsprozent eingesetzt. Das flammenhemmende Material Decabromodiphenylethan wird vorzugsweise in einem Bereich von 5 bis 15 Gewichtsprozenten verwendet.

Der Anteil des Weichmachers liegt vorzugsweise in einem Bereich von 5 bis 20 Gewichtsprozent. Mit dem Weichmacher werden vorzugsweise auch die flammenhemmende Eigenschaft und der Glasumwandlungspunkt (TG-Wert) eingestellt.

Die erfindungsgemäße Folie wird vorzugsweise mit den folgenden Schritten hergestellt:
Zusammenstellung und Vermengung der Mischung zur Erzeugung der Folie wird vorzugsweise in einer Mischereinheit mit automatischem Beladungs- und Gewichtskontrollsystem vorgenommen, um eine gleichbleibende Qualität und Eigenschaften der Mischung zu erreichen. Die Mischereinheit besteht vorzugsweise aus einem Innenmischer mit ineinandergreifenden Rotoren, der automatisiert betrieben wird. Von der Mixereinheit kann das Material auf ein Zweirollenwalzwerk mit Stockblender gelangen, um die Mischung herunterzukühlen und eine gleichmäßige Verteilung aller Inhaltsstoffe zu ermöglichen.

In einem nächsten Schritt folgt ein Vierrollenkalander. Diese Maschine soll die Struktur der Mischung insbesondere im Hinblick auf eine gewünschte Dicke und Breite der Folie vorgeben.

Nach der Kalandrierung wird die Folie auf eine vorgegebene Breite geschnitten und heruntergekühlt, z.B. durch Wasser oder Luft. Anschließend wird die Folie aufgerollt mit einer Trennfolie zum Separieren der Oberflächen.

Mit der erfindungsgemäßen Folie lassen sich in einfacher Weise vorgegebene Formstücke realisieren. Dies kann z.B. durch Schneiden erfolgen. Das Zusammensetzen von Schnittkanten zu einer endgültigen Form kann mit Hilfe von Thermoschweißen durchgeführt werden.

Außerdem kann eine Formerzeugung durch Thermoformung stattfinden.

Dadurch lassen sich einstückige Formen unterschiedlicher Ausgestaltung realisieren.

Folgende Anwendung ist denkbar:
Ein Isolationssystem umfasst vorzugsweise 4 Basiskomponenten, die die verschiedenen Elemente der Isolation und Abdeckung spezifizieren.
1. Zunächst ist das Rohr zu betrachten, das es zu isolieren gilt. Der Rohrdurchmesser kann Zentimeter oder Meter betragen, z.B. 1 cm bis 2 m.
   Dabei kommt es darauf an, was in dem Rohr transportiert wird, bei welchem Druck und bei welcher Temperatur. Z.B. handelt es sich dabei um Wasser oder Chemikalien.
2. Im Weiteren kommt es auf die Rohrform drauf an, mit allen Verzweigungen, die eine Landschaft oder eine Führung in einem Industriegelände notwendig machen.
   Ein wesentlicher Punkt des Isolationssystems ist die Isolation selber, um das Rohr und den Inhalt des Rohres gegenüber allen unerwünschten Einflüssen von außen zu schützen. Diese verschiedenen Anforderungen führen zu verschiedenen Isolationsmaterialien, wie z.B. Glaswolle, Steinwolle, Elastomerschaum, Polyurethanschaum, um nur einige der meist Verwendeten zu nennen. Die Isolation kann auch eine Kombination dieser Materialien sein. Dabei kann durch weitere Materialien auch eine Optimierung im Hinblick auf eine akustische Isolation zur Geräuschsabsorption oder Geräuschdämpfung stattfinden.
4. Das Isolationsmaterial ist schließlich gegen Einflüsse von außen wie Feuchtigkeit, Kälte, Hitze, UV-Licht, Druck und das Eindringen von Feuchtigkeit in die Isolation zu schützen. Hier kommt die erfindungsgemäße Folie zum Einsatz, mit Hilfe derer auf einfache Weise ein Isolationsmantel hermetisch gegenüber der Umgebung abgeschlossen werden kann.

Nähte können durch Thermoschweißen am Rohr selber ohne Probleme verschlossen werden, ohne dass es notwendig ist, ein zusätzlicher Stoff bzw. ein zusätzliches Material wie Kleber oder Kitt einsetzen zu müssen.

Diese Art der Verbindung kann für das komplette System einschließlich etwaiger Formstücke stattfinden. Derartige Nähte haben eine vergleichsweise bessere Stabilität als die Folie selber. Außerdem kann eine Naht durch Kaltschweißen mit einem Lösungsmittel oder Verkleben mit einem Neoprenkleber als weitere Möglichkeit zum Einsatz kommen. Grundsätzlich hat die erfindungsgemäße Folie den Vorteil, dass zum Verschließen von Stoßstellen und Nähten kein zusätzliches Material erforderlich ist, was die Handhabung einfach und die Verwendung sicher macht.

## Patentansprüche

1. Folie aufweisend 10 bis 20 Gewichtsprozent eines thermoplastischen Elastomers, wobei der thermoplastische Elastomer chloriert ist, insbesondere ein chloriertes Polyethylen, 10 bis 20 Gewichtsprozent eines Thermoplasten, wobei der Thermoplast ein auf Chlor basierender Kunststoff ist, weniger als 15 Gewichtsprozent eines Modifiziermittels, wobei das Modifiziermittel ein Harz ist, mit dem insbesondere die mechanischen Eigenschaften der Folie vorgebbar sind, weniger als 20 Gewichtsprozent eines nicht diffundierenden Weichmachers, weniger als 40 Gewichtsprozent eines Füllstoffs sowie weniger als 20 Gewichtsprozent eines flammenhemmenden Materials.

2. Folie nach Anspruch 1, **dadurch gekennzeichnet, dass** das flammenhemmende Material 1 bis 15 Gewichtsprozent der Folie beträgt.

3. Folie nach einem der vorhergehenden Ansprüche, **dadurch gekennzeichnet, dass** die Folie 5 bis weniger als 20 Gewichtsprozent Weichmacher enthält.

4. Folie nach einem der vorhergehenden Ansprüche, **dadurch gekennzeichnet, dass** ein flammenhemmendes Material in einer Weise enthalten ist, dass die Euroklasse B entsprechend EN 13501-Norm eingehalten werden kann, mit Ausnahme des Rauchemissionstests.

## Claims

1. Film consisting of 10 to 20 weight percent of a thermoplastic elastomer, wherein the thermoplastic elastomer is chlorinated, in particular a chlorinated polyethylene, 10 to 20 weight percent of a thermoplastic, wherein the thermoplastic is a chlorine-based plastic, less than 15 weight percent of a modifier, wherein the modifier is a resin by means of which in particular the mechanical properties of the film can be predetermined, less than 20 weight percent of a non-diffusing plasticiser, less than 40 weight percent of a filler and also less than 20 weight percent of a flame-inhibiting material.

2. Film according to claim 1, **characterised in that** the flame-inhibiting material comprises from 1 to 15 weight percent of the film.

3. Film according to any of the preceding claims, **characterised in that** the film comprises 5 to less than 20 weight percent of plasticiser.

4. Film according to any of the preceding claims, **characterised in that** a flame-inhibiting material is included in such a way that Euroclass B of European standard specification EN 13501 can be complied with, with the exception of the smoke emission test.

## Revendications

1. Film comprenant 10 à 20 % en poids d'un élastomère thermoplastique, l'élastomère thermoplastique étant chloré, et étant en particulier un polyéthylène chloré, 10 à 20% en poids d'un thermoplastique, le thermoplastique étant une matière plastique à base de chlore, moins de 15% en poids d'un agent modificateur, l'agent modificateur étant une résine avec laquelle notamment les propriétés mécaniques du film peuvent être prédéterminées, moins de 20% en poids d'un plastifiant non diffusant, moins de 40% en poids d'un agent de remplissage, et moins de 20% en poids d'un matériau ignifuge.

2. Film selon la revendication 1, **caractérisé en ce que** le matériau ignifuge représente de 1 à 15 % en poids du film.

3. Film selon l'une des revendications précédentes, **caractérisé en ce que** le film contient de 5 à moins de 20 % en poids de plastifiant.

4. Film selon l'une des revendications précédentes, **caractérisé en ce qu'**il contient un matériau ignifuge, de telle sorte que l'Euroclasse B selon la norme EN 13501 puisse être respectée, à l'exception du test d'émission de fumée.
